(19)

Europäisches
Patentamt
European
Patent Office
Office européen
des brevets

(11) **EP 4 686 924 A1**

(12) **EUROPEAN PATENT APPLICATION**

(43) Date of publication:
04.02.2026 Bulletin 2026/06

(21) Application number: 25191237.4

(22) Date of filing: **23.07.2025**

(51) International Patent Classification (IPC):
**G01K 1/02** *(2021.01)* **G01D 5/353** *(2006.01)*
**G01K 11/3206** *(2021.01)*

(52) Cooperative Patent Classification (CPC):
**G01K 11/3206; G01D 5/35306; G01K 1/026**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.08.2024 EP 24192217**

(71) Applicant: **Kistler Holding AG**
**8408 Winterthur (CH)**

(72) Inventor: **Jack, Waller**
**Abingdon, OX145TH (GB)**

(54) **OPTICAL SENSING METHOD AND OPTICAL SENSOR SYSTEM FOR AN OPTICAL SENSING METHOD**

(57) The invention relates to an optical sensor system (100) adapted for a sensing method using fiber segment interferometry, wherein a sensing element 1.i with a thermo-optic coefficient larger than the thermo-optic coefficient of an optical fiber 73.i is arranged at a distal end of the fiber 73.

Fig. 4

EP 4 686 924 A1

## Description

## Technical field

The invention relates to an optical sensing method and optical sensor system for an optical sensing method.

## Background art

Measurement of physical parameters such as temperature, pressure, strain, force, etc. by means of optical sensing methods usually depend on a physical parameter dependent measurement of an optical pathlength. Usually, an optical fiber, well-known in communication technology for transferring information in the form of light over long distances, is subject to a temperature or other physical parameter of the surrounding environment. As a result, light emerging from the fiber is influenced by the physical parameters of the environment through which the fiber passes. A physical parameter is for example temperature, strain, magnetic field, electric field, etc.

A way to probe certain physical parameters is to introduce optical elements into the fiber, which are especially sensitive to said physical parameter. One well-known approach is Fiber Bragg Grating based fiber optic sensors, which usually refers to techniques that directly use the physical deformation of Bragg Gratings, short FBG, fabricated into the core of an optical fiber by temperature or strain. These gratings consist of a uniform series of partially reflective/refractive defects, spatially separated by a defined period. Depending on the wavelength of the incident light, the light is reflected or transmitted. If the light is resonant with the grating structure, the reflected waves reinforce (constructive interference). The reflected wavelength $\lambda_B$, also known as Bragg wavelength, is defined as $\lambda_B = 2n_e A$, where $n_e$ is the refractive index of the fiber core. For non-ideal gratings of finite length, the Bragg wavelength is the center wavelength of a characteristic bandwidth. In general, the greater the number of grating elements, the higher the reflectivity of the grating and the narrower the bandwidth of reflected wavelengths. When the FBG deforms due to strain, the Bragg wavelength of the grating shifts. In a typical FBG sensor system, each grating in a fiber sensor has a different Bragg wavelength, allowing them to be easily distinguished spectroscopically, usually using a diffraction grating and linear array detector or a wavelength-modulated optical source and single detector. In these sensors, the linewidth of the Bragg grating, i.e. the reflection wavelength range, is much narrower than the wavelength range of the incident light. With these adequately narrow bandwidths, many sensors can be tracked within a single fiber. However, this fiber sensor concept is unsuitable for many applications, especially temperature measurement, where more localized measurements are preferable. Especially bending of the fiber necessary to reach the different measurement locations induces strain on the fiber that results in errors for temperature measurements. In applications such as installation in Electric Vehicle battery packs, there is often a requirement to route the sensor around individual battery cells, requiring multiple bends.

Another completely different method to determine physical properties of an environment using optical fiber and reflectors is Fiber Segment Interferometry, short FSI. FSI is a Range Resolved Interferometry technique originally developed by Cranfield University in the UK and disclosed in GB2568305A1 and GB2571575A1. FSI and other fiber techniques are described in detail in "Range-resolved optical interferometric signal processing", Kissinger, Thomas (thesis, Cranfield University).

An optical fiber sensor based on FSI technology can be used to measure very small, i.e. parts-per-billion, changes in the length of objects. It can do this by exploiting Range Resolved Interferometry peak-tracking algorithms, as disclosed in the above mentioned state of the art and in Thomas Kissinger, Ricardo Correia, Thomas O. H. Charrett, Stephen W. James, and Ralph P. Tatam, "Fiber Segment Interferometry for Dynamic Strain Measurements," J. Lightwave Technol. 34, 4620-4626 (2016).

FSI is a measurement technique that employs a coherent light source, for example a laser. The light is guided through an optical fiber. The light is modulated in wavelength at the desired modulation frequency, for example up to 200 kHz. The modulated light is preferably launched into an optical fiber via a coupling device, for example a 3-port optical circulator, also referred to in short as circulator. Light reflects from the optical fiber and returns through the coupling device to a photodetector.

The optical sensor system comprises an optical fiber, a reference Fiber-Bragg-grating (FBG) at a distal end of the optical fiber and multiple sensing FBGs arranged along the length of the optical fiber between the distal end and a proximal end of the optical fiber. The sensing FBGs together with the reference FBG form a series of Fabry-Pérot optical cavities, also known as Fabry-Pérot (FP) interferometers or FP resonators. The distance from the reference FBG to each individual sensing FBGs is unique, resulting in each resonator exhibiting different resonant wavelengths. The optical fiber is also referred to as a fiber for short.

A localized physical parameter is determined when two sensing FBGs and the fiber in between them are subject to the physical parameter. Then, the measurement is based on the interference of the FP cavity consisting of the reference FBG with a first sensing FBG and the interference of the FP cavity consisting of the reference FBG and a second sensing FBG. From the relative change of these two interference patterns, the change in physical parameter induced optical change in the fiber in between the first and second FBG is determined.

In contrast to a direct influence on the Bragg wavelength of the FBG, the FSI uses broadband FBG which have a larger reflection wavelength range than the modulation range of the wavelength of the incident light. The detected signal is digitized, for example at 200 MHz, providing approximately 1000 samples per measurement/modulation cycle.

Tracking the relative phase of resonances in time, from modulation cycle to modulation cycle, provides the relative distances multiplied by the refractive index of the fiber, also known as optical path length, between each sensing FBG and the reference FBG. In the following, a distance is always an optical distance.

The optical path length of each measuring segment changes due to strain. This is determined by the difference of pathlength between a first sensing reflector of the measuring segment to reference reflector and a second sensing reflector of the measuring segment to the reference reflector. Therefore, the optical fiber can be used in strain measuring applications when the optical fiber is firmly attached to another element and this element is subjected to strain. The optical path length of each segment may also change as a function of temperature, due to both the thermo-optic coefficient (temperature-dependent change in refractive index) and the thermal expansion of the fiber. For this, the fiber is usually placed inside a suitable smooth-bored sheath material, like polymer tubing or a glass capillary, which allows the optical fiber to expand freely with temperature.

It is disadvantageous that for temperature measurement, the whole measuring segments has to be placed in the measuring area. This means that the fiber has to enter the measuring area and exit the measuring area again. Especially in environments where multiple temperatures should be detected in different places, this can only be achieved by multiple bends of the fiber. However, a bend or curvature in a fiber may introduce additional strain to the measuring segment, which will disturb the measuring of the temperature. In addition, the measurement signal is weak, as thermos optic coefficients of a fiber only show slight change as a function of temperature.

It is an object of the invention to reduce the above mentioned disadvantages. It is a further object to the invention to create well defined measuring regions for the temperature using FSI technology.

## Summary of the invention

At least one of the tasks is solved by the features of the independent claims.

The inventive optical sensing method, comprises the steps of:

- providing at least one optical fiber segment; each optical fiber segment comprising a proximal end and a distal end and an optical fiber;

- providing a reference reflector arranged within the optical fiber of at least one optical fiber segment between the proximal end and the distal end;

- providing for at least one optical fiber segment a sensing element arranged at the distal end; wherein the sensing element has a thermo-optic coefficient larger than the thermo-optic coefficient of the fiber;

- providing a first reflective surface of the sensing element;

- providing a second reflective surface of the sensing element; wherein the first reflective surface is parallel to the second reflective surface;

- providing a photodetector; and

- providing an analyzer, and wherein

light is emitted into the proximal end of each optical fiber segment is propagating from the proximal end towards the distal end. The light is characterized by a center wavelength and a linewidth. The center wavelength is modulated in wavelength over a modulation range as a function of time. The bandwidth of the modulation range is larger than the linewidth of the light. The light detected by the detector is analyzed by the analyzer and a temperature of the sensing element is established based on the influence of the thermo-optic coefficient of the sensing element on the detected light. The sensing element may be an optical window or a so-called Fabry Perot Etalon or a sheet of material transparent for the optical wavelengths used. The term transparent refers to a material having an extinction coefficient according to Beer-Lambert law resulting in less than -30dB optical loss between the light source and the detector.

The thermo-optic coefficient, also called thermo optic coefficient, is understood to be the change in refractive index as a function of temperature in a material, for example an optical sensing element or an optical fiber. The thermo-optic coefficient depends on the present temperature of the material as well.

The first reflective surface has a broadband reflection such that it partially reflects all wavelengths of the modulation range. The second reflective surface has a broadband reflection such that it partially or completely reflects all wavelengths of the modulation range. The reference reflector has a broadband reflection such that it is at least partially reflecting all wavelengths of the modulation range. Thus, the reflection wavelength range of the reference reflector is broader than the modulation range.

The "reflection wavelength range" is also called "reflection range" for short or "reflective range".

The sensing element is placed in a location in which a temperature should be determined. Since the thermo-optic coefficient of the sensing element is larger than the thermo-optic coefficient of the fiber, light propagating through the sensing element twice due to reflection at the second reflective surface will be subject to the temperature dependent thermo-optic coefficient, while light reflected at the first reflective surface is not subject to the thermo-optic coefficient. In addition to the thermo-optic coefficient, also the length of the sensing element changes with temperature due to the coefficient of thermal expansion. Both effects allow to analyze similar to above mentioned FSI method the optical distance between the reference reflector and the first reflective surface on the one hand to the optical distance of the reference reflector to the second reflective surface, which is strongly dependent on temperature.

In contrast to methods using only one wavelength where only relative length changes can be detected between a reference reflector and a sensing reflector, modulating the wavelength and tracking the relative phase of resonances in time upon modulation of the light of a light source is advantageous as for the FSI based sensing method tracking only the change in phase of each interference peak relative to the reference reflector is necessary.

Positioning a dedicated sensing element arranged at the distal end of an optical fiber segment at a measuring position where a temperature is to be detected is beneficial, as the optical fiber segment only enters the measuring position. The optical fiber segment ends at the measuring position and therefore the fiber does not have to follow a curvature to exit the measuring position again. In addition, the sensing element having a larger thermo-optic coefficient than the fiber increases measurement accuracy in comparison to an optical sensor, where based on the thermo-optic coefficient of the fiber a temperature is detected.

The optical sensor system used for the optical sensing method based on FSI may comprise a InGaAs photo detector and also may preferably comprise a fiber-optic circulator and may also preferably comprise a light source, for example an Eblana EP1550DM-B laser diode with 800 kHz line width (corresponding to 0.0064 pm, wherein pm refers to picometers, meaning $10^{-12}$ meters) at a center wavelength of 1550.0 nm, nm referring to nanometers, meaning $10^{-9}$ meters), emitting at a center wavelength of $\lambda_0 = 1550.0$ nm. The laser may preferably be injection current modulated with a sinusoidal waveform that results in a peak-to-peak wavelength modulation amplitude of about 0.3 nm as measured using an optical spectrum analyzer.

Here it can be seen that the produced reference reflector gratings have reflectivities of typically 1% to 50% and bandwidths of approximately 4 nm to 5 nm full-width half maximum.

Preferably the sensing method is implemented with the reference reflector provided as a Fiber-Bragg grating (FBG). For FSI it is essential that the reference reflector has a broadband reflection such that it is partially reflecting all wavelengths of the modulation range. The reflection range of the reference reflector is in all embodiments of the sensor system and all embodiments of the method larger than the modulation range of the light. Introducing a FBG in the fiber is achieved by inscription of the FBG in a photosensitive core of a fiber. One method, to which the present invention is in no way limited, is using a frequency-quadrupled Nd-YAG laser operating at 266 nm or a single-mode fiber-coupled diode laser or a femtosecond inscription process in the visible wavelength range. Broadband reflection of the FBG is achieved for example by limiting the length of the FBG and thus increase the reflection bandwidth. Preferably, the FBG has a FWHM (full width at half maximum) of its reflectivity curve of at least 2 nm, especially preferred 4 nm around the center wavelength of the light source. The light source may be a laser, especially preferred. This allows reflection of all wavelengths of the modulation range.

Preferably, the reference reflector has a maximum reflectivity of at least 1%.

The sensing element is provided as a sheet of optically transparent material for the light. It is suggested that the optically transparent material has an optional first reflective coating forming the first reflective surface. This is beneficial, as the reflectivity of the first reflective surface is not only given by the refractive index, also called refraction index, of the sensing element, as the first reflective coating allows tailoring the reflectivity of the first reflective surface.

Preferably, the reflectivity of the first reflective surface having a first reflective coating has a FWHM (full width at half maximum) of its reflectivity curve of at least 2 nm, especially preferred 4 nm around the center wavelength of the light source. This allows at least partial reflection of all wavelengths of the modulation range. Tailoring the reflectivity of the first reflective surface is beneficial to achieve a good signal to noise ratio of interferences emerging from reflected light of the reference reflector and the first reflective coating.

Also preferred, the reflectivity of the reference reflector is smaller than half or larger than double of the reflectivity of the first reflective surface. This is beneficial, as interferences that may result from different sensing elements 1.i first or second surfaces 2.i,3.i may be easily distinguished from interferences resulting from a reference reflector 9.i with any of the first surfaces 2.i or second surfaces 3.i.

Preferably, the optically transparent material has a second reflective coating forming the second reflective surface. This is beneficial, as the reflectivity of the second reflective surface is not only given by the refractive index of the sensing element, as the second reflective coating allows tailoring the reflectivity of the second reflective surface. For the second reflective surface, a reflectivity larger 90% (900000 ppm) is beneficial, as light passing the second reflective surface may otherwise be reflected anywhere in the environment and produce unwanted reflections of light. However, a lower reflectivity similar to the reflectivity of the reference reflector or the first reflective surface are possible.

The sensing element being a sheet of optically transparent material is preferred also having a with a refractive index of at least 2.00 at the center wavelength of the light, preferable at least 3.4 at the center wavelength of the light. This is beneficial as the length of the sensing element changes with temperature due to the coefficient of thermal expansion of the transparent material. The optical pathlength of the sensing element is proportional to the refractive index. Therefore, the change in optical pathlength dependence is increased by a factor proportional to the refractive index, resulting in a magnification of the temperature dependent effect of the thermal expansion of the sensing element.

Preferred, the sensing element is provided as a sheet of optically transparent material with a thermo-optic coefficient of at least $10^{-4} \cdot K^{-1}$ ($K^{-1}$ referring to one per Kelvin).

In one preferred method, the sensing element is provided as a sheet of material comprising at least 90wt% silicon. Silicon is especially preferred at center wavelength above 800 nm, as it has a low absorption coefficient paired with a high refractive index above 3.0. In addition, Silicon has a thermal expansion coefficient between $2 \cdot 10^{-6} \cdot K^{-1}$ and $3 \cdot 10^{-6} \cdot K^{-1}$, resulting in a strong temperature dependence of the optical pathlength of the sensing element.

Silicon is preferred because the high refractive index allows for a small sensing element and the high thermo-optic coefficient allows for high sensitivity of a temperature measurement. However, alternative materials are possible, for example ZnSe, Germanium having a high refractive index and an even higher thermo-optic coefficient than silicon. However, Germanium has an absorption coefficient resulting in a higher loss in intensity of the light combined with a temperature dependent red shifting loss in intensity of the light. In general, any glass comprising a higher refractive index than a single mode fiber could be used as material for a sensing element, for example LASFN-35. In addition, sapphire could be used, having a high temperatures resistance but birefringent behavior has to be taken into account. Also polymers such as PMMA and SU-8 having negative thermo-optic coefficients may be used as material for a sensing element 1.i, which allow the separation of temperature and strain effects due to the negative thermo-optic coefficient.

In general but not preferred, any material not having a close to zero or zero thermo-optic coefficient may be used for a sensing element, but sensitivity of the temperature measurement may be extremely low.

In one embodiment, the sensing element is spaced at a distance from the distal end such that a cavity is formed between the distal end and the first reflective surface. The cavity may be filled with a fluid medium, such as a gas or a liquid. The cavity may alternatively be subject to a low pressure below 10 Pascal, herein also denominated vacuum. The fluid medium may be chosen to beneficially reduce reflections of light at surface at the end of the fiber to the cavity. Preferred, the fluid medium has a refractive index different from the refractive index of the sensing element. An additional benefit of the fluid medium or vacuum is that the cavity is filled with a medium free from contamination by absorbing elements or residues potentially contaminating the first reflecting surface or the distal end of the fiber. An additional benefit is achieved for liquids, as in general the thermal conduction is high, allowing the sensing element to reach the temperature present at the location faster. However, while choosing a transparent liquid having a high thermal conductance coefficient may be beneficial, care should be taken as to minimize the amount of liquid used, as a high amount may have a negative effect on the sensor's response time due to the specific heat capacity of a liquid in general being higher than the specific heat capacity of a gas.

It should be noted that it is possible to arrange the reference reflector in one optical fiber segment not having a sensing element. It is also possible not to arrange a reference reflector in an optical fiber segment comprising a sensing element, as long as at least one reference reflector is present within at least one optical fiber segment.

For use in an optical sensing method having the sensing element spaced at a distance from the distal end such that a cavity is formed between the distal end and the first reflective surface, it is suggested to provide an optional collimator for each optical fiber segment. The collimator is arranged in the cavity in between the distal end of the fiber and the sensing element and parallelizes the light from the distal end of the fiber to the sensing element. This is beneficial as the first reflective surface is subject to collimated light and reflected light of the first surface is introduced to the distal end of the fiber with minimal loss compared to an embodiment without collimator.

According to the optical sensing method a first interference pattern from light partially reflected by the reference reflector and partially reflected by the first reflective surface is detected by the detector as a function of time. Also a second interference pattern from light partially reflected by the reference reflector and partially or completely reflected by the second reflective surface is detected by the detector as a function of time.

The first interference pattern is analyzed and a first optical distance between the reference reflector and the first reflecting surface is determined and made available as a digital value in an analyzer. An optical distance, also known as optical path length or optical length and often denoted $\Lambda$ in equations, is the length that light needs to travel through a vacuum to have the same phase difference if it traveled through a material having a given refractive index. An analyzer can be a computer program running on a computer or an FPGA or any other form of computer program product. The second interference pattern is analyzed and a second optical distance between the reference reflector and the second reflecting surface is determined and made available as a digital value in an analyzer.

Preferably, the first interference pattern is analyzed for all wavelengths of the modulation range. As the center wavelength of the light is modulated in time, the first interference pattern detected at the is a function of time as well. The first interference pattern is demodulated similar to the described in "Range-resolved optical interferometric signal processing", Kissinger, Thomas (thesis, Cranfield University) and a first optical distance is determined. The same way as for the first interference pattern, the second interference pattern is analyzed for all wavelengths of the modulation range.

In a following step it is suggested to analyze the first interference pattern and the second interference pattern over a period of time. The period of time is larger than the modulation of the center wavelength takes and is the period of time a temperature is to be determined. The period of time therefore may range from a second to several hour or even weeks and longer. Changes in the first optical distance are determined as a function of time. Changes in the second optical distance are determined as a function of time as well. An optical distance difference between the first optical distance and the second optical distance is determined as a function of time and made available as a digital value in an analyzer. The optical distance difference is a direct measure for a temperature of the sensing element, as the first interference pattern and second interference pattern are dependent on the first optical distance and second optical distance, respectively. The optical distance difference is the optical distance the light travels through the sensing element, is reflected at the second reflective surface and travels back through the sensing element. Thus, by determining the optical distance difference as a function of time, the temperature dependent change in optical distance of the sensing element is a direct measure for the temperature of the sensing element.

The optical sensing method may be used for an optical sensing method comprising one optical fiber segment. In this case, the light is lead to the optical fiber segment through an optical circulator, while the reflected light from the optical fiber segment is lead to the detector by the circulator. A temperature is determined at one location of the sensing element of the optical fiber segment.

However, if more than one temperature is to be determined in different locations, several optical fiber segments may be used. In this case, an optical multiplexer is arranged between the light source and at least two optical fiber segments. The light is distributed to at least two optical fiber segments by the multiplexer. The multiplexer may either be arranged between the at least two optical fiber segments and the optical circulator, wherein each reference reflector has a unique optical length between the light source and the respective reference reflector of the respective optical fiber segment to distinguish reflections originating from the respective optical fiber segment. The reflected light from all optical fiber segments is reflected to the photodetector by the multiplexer and the optical circulator.

However, it is also possible to arrange for each optical fiber segment an optical circulator the multiplexer and the optical fiber segment. In this case, each circulator leads the reflected light from the respective optical fiber segment to a detector dedicated to this optical fiber segment. In this case, a unique optical length between the light source and the reference reflector of the respective optical fiber segment is not necessary, as distinction is achieved by the different detectors.

It should be noted that the reference reflector and the first reflective surface form a first Fabry-Perot cavity. In addition, the reference reflector and the second reflective surface form a second Fabry Perot cavity. The first and second interference pattern are therefore interference patterns of a Fabry-Perot cavity, also known as a Fabry-Perot interferometer.

The sensing element senses a temperature; wherein the thermo-optic coefficient of the sensing element is temperature dependent. The thermo-optic coefficient is defined as the change of the reflective index dn as a function of temperature dT, i.e. thermo-optic coefficient = dn /dT, with temperature T and reflective index n. All values given for the reflective index of the thermo-optic coefficient are understood to be in a wavelength range between 800 nm and 5000 nm and a temperature range of at least 150 K (150 Kelvin).

The invention also relates to an optical sensor system adapted for the sensing method. The optical sensor system comprises at least one light source. The optical sensor system further comprises at least an optical fiber segment. Each optical fiber segment comprises an optical fiber with a proximal end and a distal end. At least one optical fiber segment(7.i) further comprises a reference reflector arranged within the fiber between the proximal end and the distal end. At least one optical fiber segment comprises a sensing element with a thermo-optic coefficient larger than the thermo-optic coefficient of the optical fiber. The sensing element has a first partially reflective surface and a second at least partially or completely reflective surface. The first reflective surface is parallel to the second reflective surface. The optical sensing system further comprises at least a detector and an analyzer. The detector is adapted to detect light of the light source. Each of the optical fiber segments fiber is adapted to allow light propagating from the proximal end towards the distal end. The light is characterized by a center wavelength and a linewidth. The center wavelength is modulable in wavelength over a modulation range as a function of time. The modulation may be a sinusoidal modulation, although other forms of the modulation are possible, form example triangular or saw-tooth. The bandwidth of the modulation range is larger than the linewidth of the light. Preferred, the modulation range is at least 500 times larger than the linewidth, preferred at least 1000 times larger. The detector is adapted to detect a first interference pattern from light partially reflected by the reference reflector and partially reflected by the first reflective surface as a function of time. The detector is also adapted to detect a second interference pattern from light partially reflected by the reference reflector(9.i) and partially reflected by the second reflective surface as a function of time. The analyzer is adapted to analyze the first interference pattern and the second interference pattern. The analyzer may demodulate the light detected as described in "Range-resolved optical interferometric signal processing", Kissinger, Thomas (thesis, Cranfield University). The analyzer is adapted to determine a first optical distance between the reference reflector and the first reflective surface. The analyzer is adapted to determine a second optical distance between the reference reflector and the second reflecting surface.

The optical sensor system comprises at least one optical circulator. The optical circulator is preferably arranged between the light source and the optical fiber segment.

If only the temperature at one location is to be detected, the optical sensing system comprises exactly one optical fiber segment. If only the temperature at one location is to be detected, no multiplexer is needed to lead light from the light source to the one optical fiber segment.

The optical fiber sensing system may also be adapted to detect temperatures at more than one location. In this case, the optical fiber sensing system comprises at least one multiplexer adapted to provide light to at least two optical fiber segments. Each reference reflector has a unique optical length between the light source and the respective reference reflector comprised in at least one optical fiber segment.

The reference reflector is preferred provided as a Fiber-Bragg grating. Introducing a FBG in the fiber is achieved by inscription of the FBG in a photosensitive core of a fiber. One method, to which the present invention is in no way limited, is using a frequency-quadrupled Nd-YAG laser operating at 266 nm. Broadband reflection of the FBG is achieved for example by limiting the length of the FBG and thus increase the reflection bandwidth. Fiber Bragg Grating can be easily introduced to a fiber and allow an economic production of the fiber sensing system.

The sensing element is provided as a sheet of optically transparent material for the light. The light is partially reflected at the first reflective surface due to refractive index of the sensing element according to the Fresnel equations. In addition, the light is partially reflected at the second reflective surface due to refractive index of the sensing element.

Preferably, the sensing element comprises a first reflective coating forming the first reflective surface. Also preferably, the sensing element comprises a second reflective coating forming the second reflective surface. While not essential for the invention, it is beneficial to tailor the amount of light reflected at the respective first or second reflective surface. This is beneficial, as the reflectivity of the first and second reflective surface is not only given by the refractive index of the sensing element.

Preferred, the sensing element has a refractive index of at least 3.00, preferable at least 3.4. This is beneficial, as the refractive index is directly proportional to the optical distance the light travels in the sensing element. Therefore, a higher refractive index material is thinner than a material having a lower refractive index to achieve the same optical distance. This allows a very compact dimensioning of the sensing element, which can therefore be placed in confined conditions. In addition, as less material is needed to produce a sensing element, the overall heat energy to change the temperature of the sensing element is lower, resulting in a faster response time of the sensing element to temperature change.

The sensing element has preferred a thermo-optic coefficient of at least $10^{-4}$ $K^{-1}$. This results in a higher optical sensitivity of the sensing element than the optical sensitivity of a sensing element having a lower thermo-optic coefficient, like fused silica, having a thermo-optic coefficient of more than a magnitude lower, i.e. lower than $10^{-5}$ $K^{-1}$. Optical sensitivity is understood as a temperature dependent change of the optical distance for the light travelling in the sensing element, which is a basis for determining a temperature, as explained above.

Especially preferred, the sensing element comprises at least 90wt% silicon (wt% referring to weight percent). Silicon wafers and silicon windows can be produced in high precision, i.e. silicon material having a first reflective surface and a second reflective surface parallel to the first reflective surface, allowing an economic production of the sensor system.

Preferred, the sensing element is spaced at a distance from the distal end such that a cavity is formed between the distal end and the first reflective surface. This allows the first reflective surface to be precisely aligned perpendicular to the distal end of the fiber, i.e. perpendicular to the light emitted from the distal end of the fiber. Precisely perpendicular aligned is understood to be at least $\pm 6$ degree, preferred $\pm 1$ degree.

For each optical fiber segment preferably a collimator is provided. The collimator is arranged in the cavity in between the distal end of the fiber and the sensing element. The collimator is a lens or a ball lens or a concave mirror or a gradient-index optical element. The collimator parallelizes the light from the distal end (72.i) of the fiber to the sensing element. Usually, light emitted from the end of the fiber is divergent. From the divergent light, only light close to the optical axis is reflected by the first and second reflective surface back on the fiber. A collimator is therefore beneficial, as the light is parallelized and in principle all light reflected is focused on the fiber, resulting in an increase in the reflected light collected for temperature determination.

In one embodiment, the cavity comprises a fluid medium transparent to the light, as explained above.

Preferred, the sensing element has a thickness perpendicular to the first reflecting surface in between 5 mm (mm refers to millimeters, meaning 10⁻³ meters) and 20 mm. Thicker or thinner sensing elements may be used at the expense of measurement accuracy and/or space required for the sensing element. Especially for silicon, having a high refractive index coupled with a high temperature dependence of the refractive index (i.e. a high thermo-optic coefficient), the sensing element may have a thickness of as low as 3 mm, while temperature sensitivity is at least 0.1 K at a base temperature of 300 K.

Optionally, a mirror may be arranged in the cavity at an angle θ towards the optical axis. The mirror is at least partially reflecting the light and reflects light originating from the fiber to the sensing element. In this case, the first reflecting surface of the sensing element is arranged at an angel of 2θ towards the optical axis. This allows beneficially to tailor the dimensions of the optical fiber segment to the needs of any confined space. An optional collimator may preferably be arranged between the distal end of the fiber and the mirror or between the mirror and the sensing element.

It should be noted that all values are given at mean sea-level atmospheric pressure of 101.3 kPa (kilo Pascal).

In an aspect of the invention an attenuator may be arranged spaced from the second reflective surface, especially if the second reflective surface has a reflectivity of lower than 90%. This beneficially suppresses stray reflections originating from anywhere except the first or second reflective surface. The attenuator may be configured to disperse light or absorb light.

Further advantages and aspects of the invention are disclosed in the embodiments.

**Brief description of the drawings**

The drawings used to explain the embodiments are schematic representations and show:

Fig. 1 A schematic sketch of an embodiment of a sensor system,

Fig. 2 a partial detail of an embodiment of a sensing element of a sensor system according to Fig. 1,

Fig. 3 a partial detail of another embodiment of a sensing element of a sensor system according to Fig. 1,

Fig. 4 a schematic sketch of another embodiment of a sensor system,

Fig. 5 a partial detail of an embodiment of a sensing element of a sensor system according to Fig. 4,

Fig. 6 a partial detail of another embodiment of a sensing element of a sensor system according to Fig. 4,

Fig. 7 a partial detail of another embodiment of a sensing element of a sensor system according to Fig. 4

Fig. 8 a partial detail of another embodiment of a sensing element of a sensor system according to Fig. 4

Fig. 9 a partial detail of another embodiment of a sensing element of a sensor system according to Fig. 4,

Fig. 10 a partial detail of another embodiment of a sensing element of a sensor system according to Fig. 4,

Fig. 11 a schematic sketch of another embodiment of a sensor system,

Fig. 12 a partial detail of an embodiment of a sensing element of a sensor system according to Fig. 11,

Fig. 13 a partial detail of another embodiment of a sensing element of a sensor system according to Fig. 11,

Fig. 14 a partial detail of another embodiment of a sensing element of a sensor system according to Fig. 11,

Fig. 15 a schematic sketch of another embodiment of a sensor system,

Fig. 16 a partial detail view of an embodiment of a sensing element of a sensor system according to Fig. 15,

Fig. 17 a schematic illustration of the optical sensing method,

Fig. 18 A schematic illustration of the center wavelength, line width, reflective range, and modulation range,

Fig. 19 a schematic illustration of a first and second interference pattern.

**Preferred Embodiments**

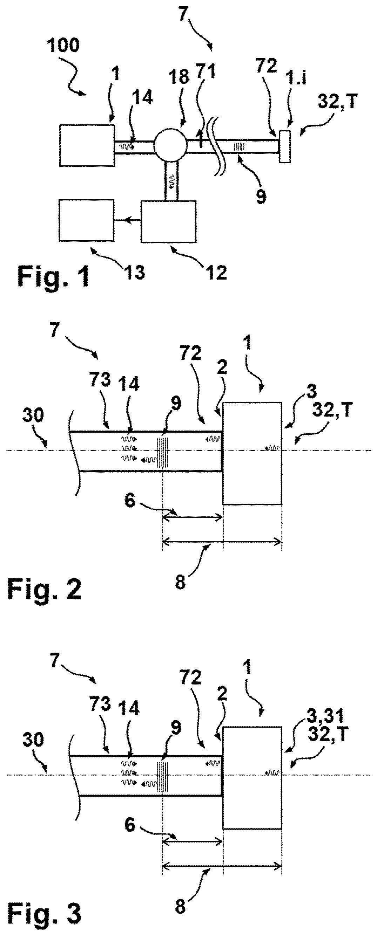

Fig. 1 to Fig. 10 show different embodiments of a sensor system 100 adapted to detect one temperature T at one location. Fig. 1 shows a general concept of the sensor system 100, whereas Fig. 2 to Fig. 10 show different embodiments of the optical fiber segment 7 used in the optical sensor system 100 schematically shown in Fig. 1. The sensor system 100 in this case comprises one optical fiber segment 7, each optical fiber segment 7 comprising a proximal end 71 and a distal end 72 and an optical fiber 73. The sensor system 100 further comprises a reference reflector 9 arranged within the optical fiber 73 between the proximal end 71 and the distal end 72. The sensor system 100 further comprises a light source, for example a laser. The sensor system 100 also comprises a detector 12, also called photodetector 12 and an analyzer 13.

The optical fiber segment 7 comprises a sensing element 1 arranged at the distal end 72 at a location 32 at which a temperature T is to be determined. The sensing element comprises a first reflective surface 2 and a second reflective surface 3 of the sensing element 1. The first reflective surface 2 is parallel to the second reflective surface 3. The first and second reflective 2,3 surface are arranged perpendicular to an optical axis 30. Light 14 is mainly travelling on the optical axis 30 from the distal end 72 to the second reflective surface 3 and vice versa.

Light 14 is emitted into the proximal end 71 of each optical fiber segment 7 and is propagating from the proximal end 7 towards the distal end 72.

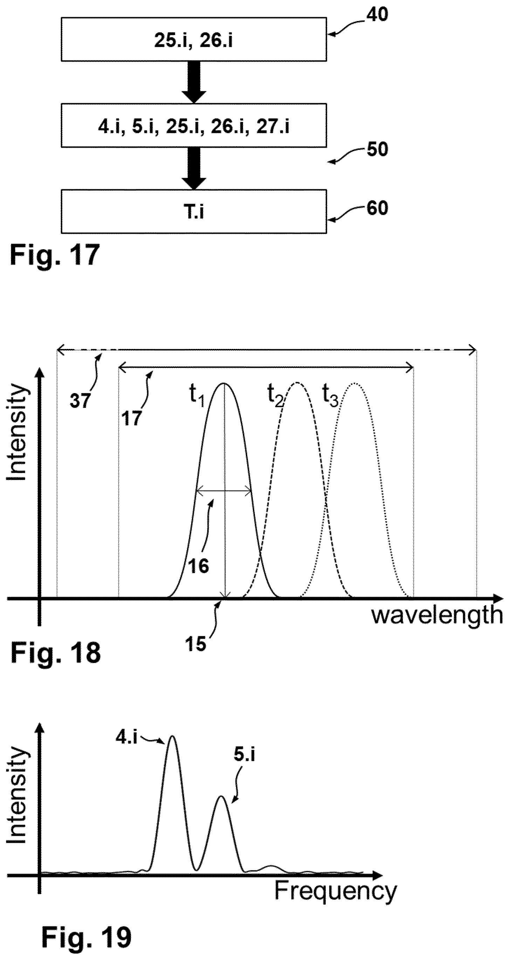

For all embodiments represented in the figures, the light 14 is characterized by a center wavelength 15 and a linewidth 16, as shown in Fig. 18. The center wavelength 15 is modulated in wavelength over a modulation range 17, also indicated in Fig. 18, as a function of time. In Fig. 18 this is indicated by showing three snapshots of light 14 intensity over wavelength at three times $t_1$ (solid line), $t_2$ (dashed line), and $t_3$ (dotted line), indicating the modulation of the center wavelength in a modulation cycle. It is essential and shown in Fig. 18, that the bandwidth of the modulation range 17 is larger than the linewidth 16 of the light 14.

The light 14 in Fig. 1 is passing a circulator 18 and subsequently is partially reflected at the reference reflector 9, partially reflected at the first reflective surface 71 and partially or completely reflected at the second reflective 72 surface. The reflected light 14 lead to the detector 12 by the circulator 18. The reflected light 14 is detected by the detector 12 and the resulting signal of the detector 12 is subsequently analyzed by the analyzer 13. A temperature T of the sensing element 1 is established based on the influence of the thermo-optic coefficient of the sensing element 1 on the detected light 14.

Fig. 1 to Fig. 10 show the reference reflector 9 in the preferred form as a Fiber-Bragg grating. The sensing element 1 is shown in Fig. 1 to Fig. 10 as a sheet of material optically transparent for the light 14, also called optically transparent material.

In the embodiments shown in Fig. 1 to Fig. 3, the sensing element 1 is arranged directly adjacent to the fiber 73 at the distal end 72. The first reflecting surface 2 is reflecting due to the difference in refractive index between the fiber 73 and the sensing element 1. The second reflective surface 3 is reflecting due to the difference in refractive index of the sensing element to the area behind.

In the embodiment of the optical sensor system 100 shown in Fig. 3, the second reflective surface 3 has an optional reflective coating 31 adapted to tailor the amount of light 14 reflected to the detector 12. Although a reflective coating 31 is mentioned, it should be noted that the reflective coating 31 may also lower the reflectivity to tailor the reflectivity of the second reflective surface 3.

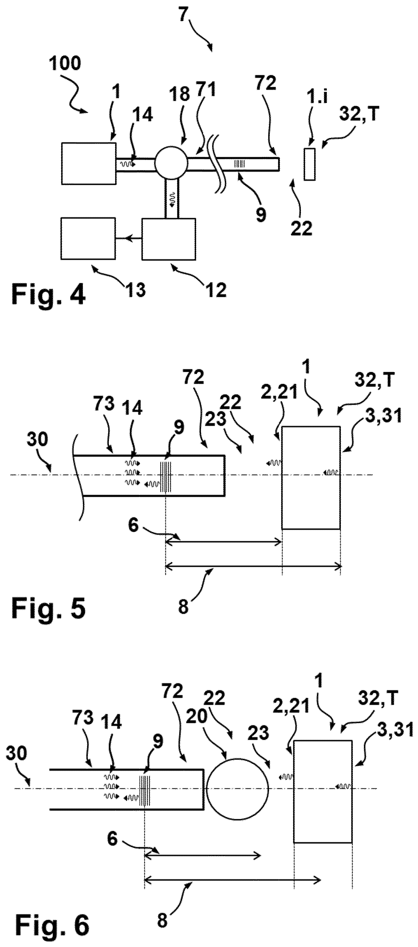

The embodiments of the optical sensor system shown in Fig. 4 to Fig. 10 shown an alternative arrangement of the sensing element 1 in the optical fiber segment 7. In these embodiments, the sensing element 1 is arranged spaced at a distance from the distal 72 end of the fiber 73 such that a cavity 22 is formed between the distal end 72 and the first reflective surface 2. In these embodiments, the first reflecting surface 2 of the sensing element 1 comprises an optional first reflective coating 21. Although the first reflective coating 21 is mentioned, it should be noted that the first reflective coating 21 may also lower the reflectivity to tailor the reflectivity of the first surface 2. In addition, the second reflective surface 3 comprises a second reflective coating 31, already present in the embodiment shown in Fig. 3 and having the same benefit. The cavity comprises a fluid medium or vacuum, vacuum meaning a fluid medium at a low pressure below 10 Pascal. The first and second reflective surface 2,3 are arranged perpendicular to an optical axis 30. Light 14 is mainly travelling on the optical axis 30 from the distal end 72 to the second reflective surface 3 and vice versa.

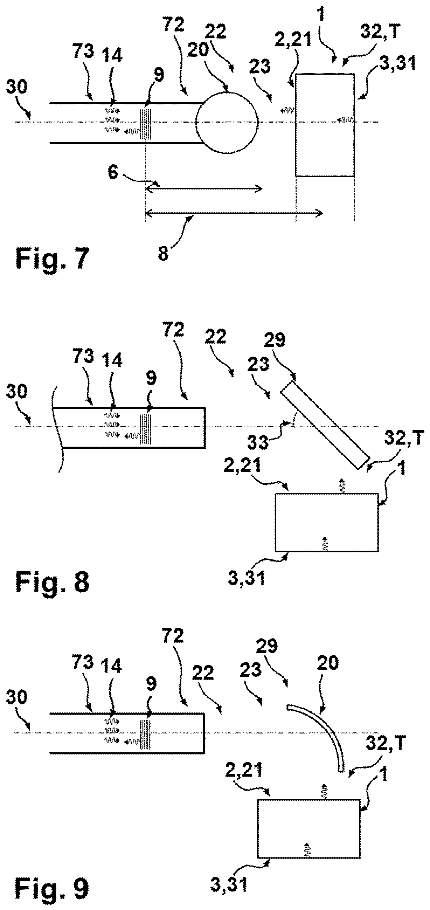

In one embodiment shown in Fig. 6, a collimator 20 is arranged in the cavity 22 of the optical fiber segment 7. The collimator is arranged between the distal end 72 and the sensing element 1. The collimator 20 may be a lens or a ball lens or a gradient-index optical element or a concave mirror, the last shown in Fig. 9. The collimator 20 parallelizes the light 14 from the distal end 72 of the fiber 73 to be parallel to the optical axis 30.

In one alternative embodiment to the embodiment of Fig. 6 shown in Fig. 7, a collimator 20 is arranged directly adjacent the distal end 72 of the fiber 73 in the cavity 22 of the optical fiber segment 7. This is beneficial, as the fiber is conform to the surface of the collimator and the fiber-cavity interface is not present, reducing the reflection at the distal end 72 of the fiber 73. The reduction of reflection is achieved as refractive index of the collimator 20 and the fiber 73 have a lower difference than the fiber and the cavity, usually filled with a gas or vacuum. The collimator 20 may be a lens or a ball lens or a gradient-index optical element. Similar to the embodiment of Fig. 6, the collimator 20 of the embodiment shown in Fig. 7 parallelizes the light 14 from the distal end 72 of the fiber 73 to be parallel to the optical axis 30.

The embodiment shown in Fig. 8 comprises a mirror 29 arranged in the cavity 22 of the optical fiber segment 7. The mirror is arranged between the distal end 72 and the sensing element 1 and is adapted to reflect light 14 from the distal end 72 to the sensing element 1. For this, the mirror is arranged at an angle θ 33 to the optical axis 30 and the first reflective surface is arranged at an angle of 2θ towards the optical axis. This enables to tailor the dimensions of the optical fiber segment 7 to the boundaries that may be given by the location.

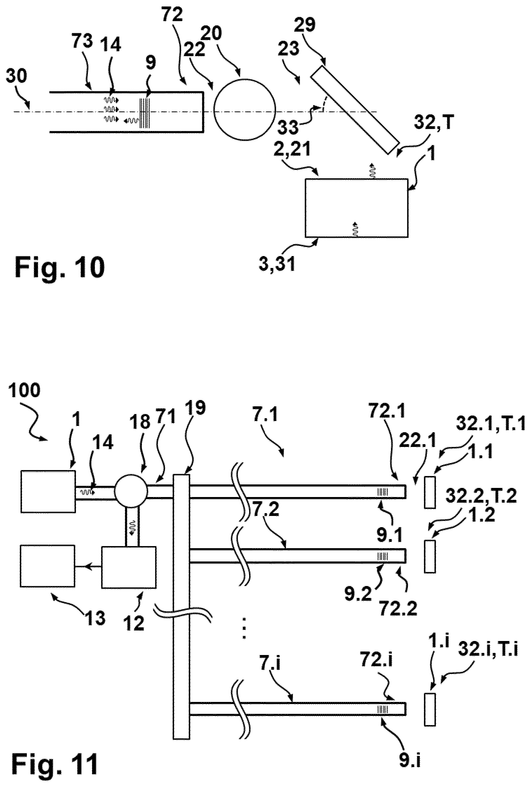

Of course, is also possible to combine the embodiments of Fig. 6 or Fig. 7 and Fig. 8 such, that a collimator 20 and a mirror 29 are arranged in the cavity 22, as shown in Fig. 10. It is therein irrelevant if the collimator 20 is first in the beam path of the light 14 or the mirror 29.

The embodiments of the optical sensor systems 100 shown in the Fig. 11 to Fig. 16 are adapted to detect at several locations 32.i the respective temperature T.i at the location. Reference numbers refereeing to the various elements in the embodiments described with respect to Fig. 11 to 16 are similar to the reference numbers shown in the embodiments of Fig. 1 to Fig. 10 but are amended with an additional ".i" (here and in the following, i>1, $i \in \mathbb{N}$) to indicate several instances of the respective element may be present in the respective optical fiber segment 7.i in the sensor system 100.

The embodiments of the optical sensor system 100 have, same as the embodiments shown in Fig. 1 to Fig. 10, a light source 11, a detector 12, an analyzer 13 and a circulator 18. Deviating from the embodiments of the optical sensor system 100 shown in the Fig. 11 to Fig. 16 comprise at least two optical fiber segments 7.i. In between the circulator and the optical fiber segments 7.i a multiplexer 19 is arranged. The multiplexer 19 distributes the light 14 from the light source to the respective optical fiber segments 7.i. Similar, the multiplexer 19 collects the reflected light 14 from each optical fiber segment 7.i and transmits it to the circulator 18 for further transmission to the detector 12.

Each optical fiber segment 7.i comprises an optical fiber 73.i with a proximal end 71.i and a distal end 72.i.

At least one optical fiber segment 7.i comprises a sensing element 1.i arranged at the distal end 72.i at a location 32.i at which a temperature T.i is to be determined. The sensing element 1.i comprises a first reflective surface 2.i and a second reflective surface 3.i. The first reflective surface 2.i is parallel to the second reflective surface 3.i. The first and second reflective surface 2.i,3.i are arranged perpendicular to an optical axis 30.i. Light 14 is mainly travelling on the optical axis 30.i from the distal end 72.i to the second reflective surface 3.i and vice versa.

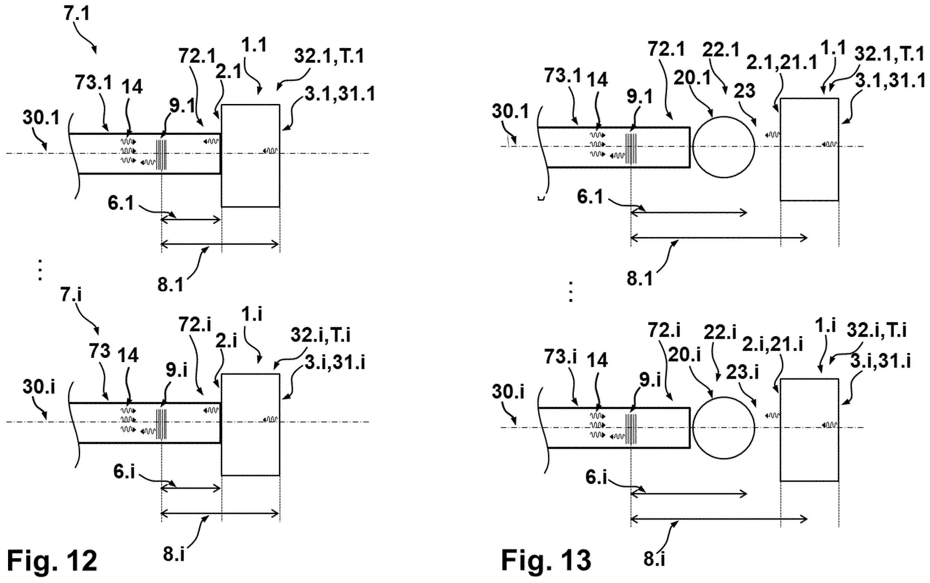

At least one optical fiber segment 7.i furthermore comprises a reference reflector 9.i, shown in the preferred form as a Fiber-Bragg grating. In the embodiment shown in Fig. 12, the sensing elements 1.i are arranged directly adjacent to the respective distal end 72.i of the fibers 73.i. It should be noted that Fig. 11 shows the general concept, while the enlarges shown embodiments of Fig. 12 and Fig. 13 show the arrangement of the respective elements of the optical fiber segments 7.i in more detail. It should be noted that the embodiments of an optical fiber segment 7 of Fig. 2 and/or Fig. 3 may be used for the at least two optical fiber segments 7.i of Fig. 12. It is also possible to imagine a combination of at least one optical fiber segment 7 of Fig. 2 and at least one optical fiber segment 7 of Fig. 3 to be used in the same optical sensing system according to Fig. 11.

The embodiment of optical fiber segments 7.i in Fig. 13 shows a detail of the embodiment of the sensing system 100 of Fig. 11. The sensing elements 1.i are arranged spaced at a distance from the distal ends 72.i of the fibers 73.i such that cavities 22.i are formed between the distal ends 72.i and the respective first reflective surfaces 4.i. The first reflecting surfaces 2.i of the sensing elements 1.i comprise an optional first reflective coating 21.i. In addition, the second reflective surfaces 3.i comprise a second reflective coating 31.i. The respective cavities comprise a fluid medium 23 or vacuum 23 each. The first and second reflective surface 2.i,3.i are arranged perpendicular to the respective optical axis 30.i. Light 14 is mainly travelling on the respective optical axis 30.i from the distal ends 72.i to the second reflective surfaces 3.i and vice versa.

The embodiment in Fig. 13 shows optical fiber segments 7.i with an optional collimator 20.i arranged in the cavity 22.i of each the optical fiber segment 7.i.

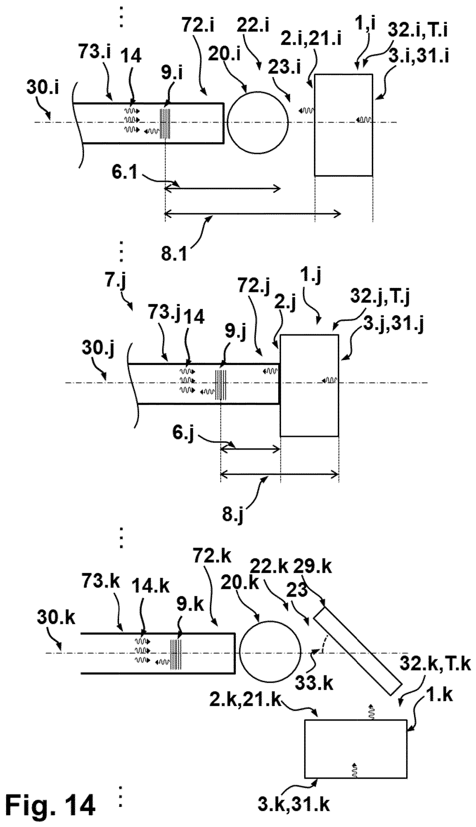

Of course, a sensor system 100 may also comprise multiple different embodiments of optical fiber segments 7.i, which is indicated for some embodiments of optical fiber segments in Fig. 14. Therein, to distinguish between reference numbers present in the different embodiments of the optical fiber segments 7.i, the reference numbers are amended with a ".j" and ".k" as well, (here and in the following, i,j,k>1; $i,j,k \in \mathbb{N}$; and i>j>k). The three vertical dots indicate that multiple more and different optical fiber segments may be present in between the ones shown. The embodiment of Fig. 14 shows a sensing system 100 having at least one optical fiber segment 7.i in form of the embodiment of an optical fiber segment 7.i known from the embodiment of Fig. 13, at least one optical fiber segment 7.j in form of the embodiment of an optical fiber segment 7.i known from the embodiment of Fig. 12, and at least one optical fiber segment 7.k in form of the embodiment of an optical fiber segment 7 known from the embodiment of Fig. 10. All elements of the respective optical fiber segments 7.i,7.j,7.k are similar to elements referenced with the same reference numbers in previous embodiments of a sensor system 100.

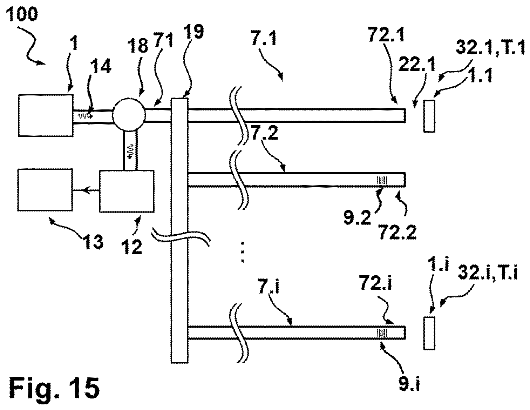

A different embodiment of a sensor system 100 is shown in Fig. 15, exemplary for an embodiment wherein the sensing element 1.1 is arranged in an optical fiber segment 7.1 not comprising a reference reflector 9.i, but a reference reflector 9.2 is arranges in another optical fiber segment 7.2 not comprising a sensing element 1.i. reference reflector. First and second interference patterns will be based on reflections in different optical fiber segments 7.1, 7.2. However, a reference reflector may also be arranged in any other optical fiber segment 7.i also comprising a sensing element 1.i, as shown in Fig. 15. Of course, any natural number x between 1 and n (n being the number of optical fiber segments, n>1; $n \in \mathbb{N}$ ;) of reference reflectors 9.i may be present in a sensor system 100 and any natural number y between 1 and n (n being the number of optical fiber segments, n>1; $n \in \mathbb{N}$ ;) of sensing elements 1.i may be present in a sensor system, wherein x+y≥n.

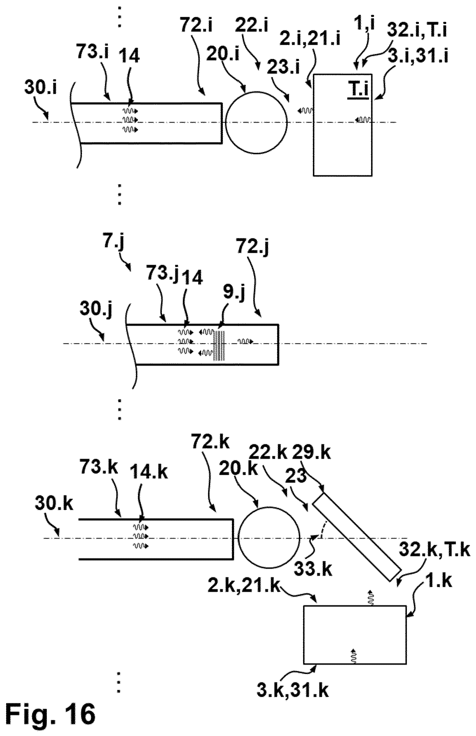

Fig. 16 shows as an example of optical fiber segments 7.i,7.j,7.k of an embodiment of a sensor system 100 according to the embodiment shown in Fig. 15. Therein, to distinguish between reference numbers present in the different embodiments of the optical fiber segments 7.i, the reference numbers are amended with a ".j" and ".k" as well, (here and in the following, i,j,k>1; $i, j, k \in \mathbb{N}$ ; and i>j>k). The embodiment of Fig. 16 shows a sensing system 100 having at least one optical fiber segment 7.i in form of the embodiment of an optical fiber segment 7.i known from the embodiment of Fig. 13 but without reference reflector 9.i arranged in the fiber 73.i, at least one optical fiber segment 7.j only having an reference reflector 9.j but no sensing element 1.j, and at least one optical fiber segment 7.k in form of the embodiment of an optical fiber segment 7 known from the embodiment of Fig. 10. All elements of the respective optical fiber segments 7.i,7.j,7.k are similar to elements reference with the same numbers in previous embodiments of a sensor system 100.

A sensor system is not limited to the embodiments shown but may comprise also comprise a different assembly of embodiments of optical fiber segments. It should be noted that embodiments are possible in which the material of the sensing element 1.i may be different for different optical fiber segments 7.i, such that a best suited material may be chosen for the expected temperature T.i or expected temperature range or necessary response time for a changing temperature T.i at the respective location 32.i.

Fig. 17 shows a schematic representation of the optical sensing method comprised of at least three steps 40, 50, and 60. A first step 40 at least comprises providing any beforementioned embodiment of a sensor systems 100 mentioned before. The first step 40 further comprises emitting light 14 into the proximal end of each optical fiber segment 7.i, the light 14 characterized by a center wavelength 15 and a linewidth 16, wherein the center wavelength 15 is modulated in wavelength over a modulation range 17 as a function of time, wherein the bandwidth of the modulation range 17 is larger than the linewidth 16 of the light 14, as shown in Fig. 18.

The second step of the method at least comprises detecting light 14 in form of first and second interference patterns 4.i,5.i and analyzing the signal of the detected light 14.

The third step 60 at least comprises establishing a temperature T.i of each sensing element 1.i based on the influence of the thermo-optic coefficient of the sensing element 1.i on the detected light 14.

Preferred, the second step 50 may furthermore include detecting a first interference pattern 4.i from light 14 partially reflected by the reference reflector 9.i and partially reflected by the first reflective surface 2.i as a function of time and detecting a second interference pattern 5.i from light 14 partially reflected by the reference reflector 9.i and partially or completely reflected by the second reflective surface 3.i as a function of modulation time.

An example of a first interference pattern 4.i and a second interference pattern 5.i is shown schematically in Fig. 19 exemplarily for a sensor system 100 with one sensing element 1.i. The modulated light 14 reflected at the first reflective surface 2.i and the reference reflector 9 is analyzed for the modulation range 17 of the light 14 and Fourier transformed into the frequency region. The left peak of the signal shown in Fig. 19 is corresponding to this first interference pattern 4.i. The modulated light 14 reflected at the second reflective surface 3.i and the reference reflector 9 is analyzed for the modulation range 17 of the light 14 and Fourier transformed into the frequency region. The right peak of the signal shown in Fig. 19 is corresponding to this second interference pattern 5.i.

Preferred, the second step 50 may furthermore include analyzing the first interference pattern 4.i and determining a first optical distance 25.i between the reference reflector 9.i and the first reflecting surface 2.i. Determining of a first optical distance 25.i implemented as a computer program product analyzing the first interference pattern 4.i and calculating the first optical distance 25.i based on the first interference pattern 4.i. The second step 50 may furthermore include analyzing the second interference pattern 5.i and determining a second optical distance 26.i between the reference reflector 9.i and the second reflecting surface 3.i, similar to the first optical distance 25.i (mutatis mutandis).

Preferably, step 50 is performed at least for all wavelengths of the modulation range 17. This may be done by demodulation of the detected lights signal as explained above.

Preferred, the second step 50 may furthermore include analyzing the first interference patterns 4.i and the second interference patterns 5.i over a period of time and determining changes in the first optical distance (25.i) and/or second optical distances (26.i) as a function of time. Furthermore, step 50 may include determining an optical distance difference 27.i between the first optical distance 25.i and the second optical distance 26.i is determined as a function of time and made available.

Preferred, the first step 40 may furthermore include distributing the light 14 to at least two optical fiber segments 7.i, wherein each optical fiber segment 7.i has a unique optical length between the light source 11 and the reference reflector 9.i of the respective optical fiber segment 7.i.

Reflected light 14 from all optical fiber segments 7.i is reflected to the photodetector 12 by the multiplexer 19 and an optical circulator 18.

Examples of suited center wavelength 15 given above are only meant as suggestions, in no way limiting neither the method 40,50,60 nor the sensing system 100 to include only this center wavelength 15.

A center wavelengths 15 approximately between 1290 nm and 1620 nm is beneficial, as suitable light sources 11 are available at relatively low cost. In addition, optical fibers 73.i are usually optimized to have the lowest attenuation at these wavelengths. A center wavelength of 1550 nm is typically selected.

The light source 11 is configured to emit light 14 modulated at a modulation rate. The light source 11 is configured to sweep from a start wavelength to an end wavelength during the reciprocal modulation rate. The start wavelength usually differs at least 3 pm (picometer) from the end wavelength. The difference between start wavelength and end wavelength is dependent on the required measurement resolution. A sensing element 1.i in form of a silicon etalon of 3 mm physical length can be resolved by using a modulation range 17 of 300 pm.

According to another aspect of a sensor system , the light source 11 is a Distributed Feedback diode. According to another aspect of a sensor system , the photodetector 12 comprises exactly one single photosensitive element. Distributed Feedback diode lasers are relatively inexpensive and robust. The FSI based sensor system does not require costly external-cavity lasers.

Explicitly included in possible embodiments of the sensor system 100, are also embodiments having a combination of aspects of embodiments described above.

List of reference symbols

| | |
|---|---|
| 1.i | Sensing element |
| 2.i | First reflective surface |
| 3.i | Second reflective surface |
| 4.i | First interference pattern |
| 5.i | Second interference pattern |
| 6.i | First optical distance |
| 7.i | Optical fiber segment |
| 8.i | Second optical distance |
| 9.i | Reference reflector |
| 11 | Light source, laser |
| 12 | Detector, Photodetector |
| 13 | Analyzer |
| 14 | Light |
| 15 | Center wavelength |
| 16 | Linewidth |
| 17 | Modulation range |
| 18 | circulator |
| 19 | Multiplexer, multiplexing unit |

| | |
|---|---|
| 20.i | Collimator, lens |
| 21.i | First reflective coating |
| 22.i | Cavity |
| 23.i | Fluid medium |
| 24.i | Distance |
| 25.i | First optical distance |
| 26.i | Second optical distance |
| 27.i | Distance difference |
| 28.i | Location |
| 29.i | Mirror |
| 30.i | Optical axis |
| 31.i | Second reflective coating |
| 32.i | location |
| 33.i | Angle $\theta$ |
| 37 | Reflection range, reflective range |
| 40 | First step |
| 50 | Second step |
| 60 | Third step |
| 71.i | Proximal end |
| 72.i | Distal end |
| 73.i | Optical fiber |
| 100 | Sensor system |
| T.i | Temperature |

**Claims**

1. An optical sensing method, comprising the steps of

   • providing at least one optical fiber segment (7.i); each optical fiber segment (7.i) comprising a proximal end (71.i) and a distal end (72.i) and an optical fiber (73.i);
   • providing a reference reflector (9.i) arranged within the optical fiber (73.i) of at least one optical fiber segment (7.i) between the proximal end (71.i) and the distal end (72.i);
   • providing for at least one optical fiber segment (7.i) a sensing element (1.i) arranged at the distal end (72.i); wherein the sensing element (1.i) has a thermo-optic coefficient larger than the thermo-optic coefficient of the fiber (73.i);
   • providing a first reflective surface (2.i) of the sensing element (1.i); providing a second reflective surface (3.i) of the sensing element (1.i); wherein the first reflective surface (2.i) is parallel to the second reflective surface (3.i);
   • providing a photodetector (12); and providing an analyzer (13);

   wherein light (14) is emitted into the proximal end of each optical fiber segment (7.i) and is propagating from the proximal end (71.i) towards the distal end (72.i); wherein the light (14) is **characterized by** a center wavelength (15) and a linewidth (16); wherein the center wavelength (15) is modulated in wavelength over a modulation range (17) as a function of time; wherein the bandwidth of the modulation range (17) is larger than the linewidth (16) of the light (14);

wherein light (14) detected by the detector is analyzed by the analyzer and a temperature (T.i) of the sensing element (1.i) is established based on the influence of the thermo-optic coefficient of the sensing element (1.i) on the detected light.

2. The optical sensing method according to claim 1; wherein the reference reflector (9.i) is provided as a Fiber-Bragg grating; and wherein the sensing element (1.i) is provided as a sheet of optically transparent material for the light (14); and wherein the optically transparent material has a first reflective coating (21.i) forming the first reflective surface (2.i); and that the optically transparent material has a second reflective coating (31.i) forming the second reflective surface (3.i).

3. The optical sensing method according to any of claims 1 to 2; wherein the sensing element (1.i) is provided as a sheet of optically transparent material with a refractive index of at least 2.00 at the center wavelength (15), preferable at least 3.4 at the center wavelength (15).

4. The optical sensing method according to any of claims 1 to 3; wherein the sensing element (1.i) is provided as a sheet of optically transparent material with a thermo-optic coefficient of at least $10^{-4} \cdot K^{-1}$.

5. The optical sensing method according to any of claims 1 to 4; wherein the reference reflector (9.i) is provided as a Fiber-Bragg grating; the reflection range (37) of the reference reflector (9.i) is larger than the modulation range (17) and wherein the sensing element (1.i) is provided as a sheet of material comprising at least 90wt% silicon.

6. The optical sensing method according to any of claims 1 to 5; wherein the sensing element (1.i) is spaced at a distance (24.i) from the distal end (72.i) such that a cavity (22.i) is formed between the distal end (72.i) and the first reflective surface (2.i);

7. The optical sensing method according to claim 6; wherein for each optical fiber segment (7.i) preferably a collimator (20.i) is provided; wherein the collimator (20.i) is arranged in the cavity (22.i) in between the distal end (72.i) of the fiber (73.i) and the sensing element (1.i); wherein the collimator (20.i) parallelizes the light (14) from the distal end (72.i) of the fiber (7.i) to the sensing element (1.i); wherein the cavity (22.i) comprises a fluid medium (23.i) transparent to the light (14).

8. The optical sensing method according to any of claims 1 to 7; wherein a first interference pattern (4.i) from light (14) partially reflected by the reference reflector (9.i) and partially reflected by the first reflective surface (2.i) is detected by the detector as a function of time; wherein a second interference pattern (5.i) from light (14) partially reflected by the reference reflector (9.i) and partially or completely reflected by the second reflective surface (3.i) is detected by the detector (12) as a function of modulation time.

9. The optical sensing method according to claim 8; wherein the first interference pattern (4.i) is analyzed and a first optical distance (25.i) between the reference reflector (9.i) and the first reflecting surface (2.i) is determined and made available; and wherein the second interference pattern (5.i) is analyzed and a second optical distance (26.i) between the reference reflector (9.i) and the second reflecting surface (3.i) is determined and made available; and wherein the first interference pattern (4.i) is analyzed at least for all wavelengths of the modulation range (17); wherein the first interference pattern (4.i) and the second interference pattern (5.i) are analyzed over a period of time; wherein changes in the first optical distance (25.i) are determined as a function of time; wherein changes in the second optical distance (26.i) are determined as a function of time; and wherein an optical distance difference (27.i) between the first optical distance (25.i) and the second optical distance (26.i) is determined as a function of time and made available.

10. The optical sensing method according to any of claims 1 to 11; wherein the light (14) is distributed to at least two optical fiber segments (7.i) by a multiplexer (19); wherein each optical fiber segment (7.i) has a unique optical length between the light source (11) and the reference reflector (9.i) of the respective optical fiber segment (7.i); wherein reflected light (14) from all optical fiber segments (7.i) is reflected to the photodetector (12) by the multiplexer (19) and an optical circulator (18).

11. The optical sensing method according to any of claims 1 to 10; wherein the sensing element (1.i) senses a temperature (T.i); wherein the thermo-optic coefficient of the sensing element (1.i) is temperature dependent.

12. A optical sensor system (100) adapted for the sensing method of any of the prior claims; wherein the optical sensor system (100) comprises at least one light source (11); at least an optical fiber segment (7.i); each optical fiber segment (7.i) comprising an optical fiber (73.i) with a proximal end (71.i) and a distal end (72.i); at least one optical fiber segment (7.i) further comprising a reference reflector (9.i) arranged within the fiber (73.i) between the proximal end (71.i) and the distal end (72.i); at least one of the optical fiber segments (7.i) comprising a sensing element (1.i) with a thermo-optic coefficient larger than the thermo-optic coefficient of the optical fiber (73.i), a first partially reflective surface (2.i) and a second at least partially or completely reflective surface (3.i); wherein the first reflective surface (2.i) is parallel to the second reflective surface (3.i); the optical sensing system (100) further comprising at least a detector (12) and an analyzer (13); wherein each of the optical fiber segments (7.i) fibers (73.i) is adapted allow light (14) propagating from the proximal end (71.i) towards the distal end (72.i); wherein the light (14) is **characterized by** a center wavelength (15) and a linewidth (16); wherein the center wavelength (15) is modulable in wavelength over a modulation range (17) as a function of time; wherein the bandwidth of the modulation range (17) is larger than the linewidth (16) of the light (14); and wherein the detector (12) is adapted to detect a first interference pattern (4.i) from light (14) partially reflected by the reference reflector (9.i) and partially reflected by the first reflective surface (2.i) as a function of time; wherein the detector (12) is adapted to detect a second interference pattern (5.i) from light (14) partially reflected by the reference reflector(9.i) and partially reflected by the second reflective surface (3.i) as a function of time; and wherein the analyzer (13) is adapted to analyze the first interference pattern (4.i) and the second interference pattern (5.i); and wherein the analyzer (13) is adapted to determine a first optical distance (6.i) between the reference reflector (9.i) and the first reflective surface (2.i); and wherein the analyzer (13) is adapted to determine a second optical distance (8.i) between the reference reflector (9.i)and the second reflecting surface (5.i).

13. The optical sensor system (100) according to claim 12; wherein the optical sensing system (100) comprises at least one optical circulator (18); at least a multiplexer (19) adapted to provide light (14) to at least two optical fiber segments (7.i); wherein each reference reflector (9.i) has a unique optical length between the light source (11) and the respective reference reflector (9.i) comprised in the at least one optical fiber segment (7.i).

14. The optical sensor system (100) according to any of claims 14 to 15; wherein the reference reflector (9.i) is provided as a Fiber-Bragg grating; the reflection range (37) of the reference reflector (9.i) is larger than the modulation range (17); wherein the sensing element (1.i) is provided as a sheet of optically transparent material for the light (14); wherein the sensing element (1.i) comprises a first reflective coating (21.i) forming the first reflective surface (2.i); and wherein the sensing element (1.i) comprises a second reflective coating (31.i) forming the second reflective surface (3.i); wherein the sensing element (1.i) has a refractive index of at least 3.00, preferable at least 3.4; and wherein the sensing element (1.i) has a thermo-optic coefficient of at least $10^{-4} \cdot K^{-1}$, and/or wherein the sensing element (1.i) comprises at least 90wt% silicon.

15. The optical sensor system (100) according to any of claims 12 to 14; wherein the sensing element (1.i) is spaced at a distance from the distal end (72.i) such that a cavity (22.i) is formed between the distal end (72.i) and the first reflective surface (4.i); wherein preferably for each optical fiber segment (7.i) a collimator (20.i) is provided; wherein the collimator (20.i) is arranged in the cavity (22.i) in between the distal end (72.i) of the fiber (73.i) and the sensing element (1.i); wherein the collimator (20.i) is a lens or a ball lens or a concave mirror or a gradient-index optical element; wherein the collimator (20.i) parallelizes the light (14) from the distal end (72.i) of the fiber (73.i) to the sensing element (1.i); wherein the cavity (22.i) comprises a fluid medium (23.i) transparent to the light (14); wherein the sensing element (1.i) senses a temperature; and wherein one optical property of the sensing element (1.i) is temperature dependent.

Fig. 1

Fig. 2

Fig. 3

**Fig. 4**

**Fig. 5**

**Fig. 6**

**Fig. 7**

**Fig. 8**

**Fig. 9**

**Fig. 10**

**Fig. 11**

Fig. 12

Fig. 13

Fig. 14

Fig. 15

**Fig. 16**

**Fig. 17**

**Fig. 18**

**Fig. 19**

# EUROPEAN SEARCH REPORT

Europäisches
Patentamt
European
Patent Office
Office européen
des brevets

**Application Number**

EP 25 19 1237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/006663 A1 (ZERWEKH PAUL S [US] ET AL) 11 January 2007 (2007-01-11) * paragraphs [0011], [0013], [0014], [0018], [0046] - [0049], [0051] - [0053], [0055] - [0057], [0060], [0061], [0064], [0069], [0099] - [0104]; figures 1,3,4D,5,21,22 * ----- | 1-15 | INV. G01K1/02 G01D5/353 G01K11/3206 |
| A | EP 2 825 852 B1 (OXSENSIS LTD [GB]) 12 September 2018 (2018-09-12) * paragraphs [0001], [0009] - [0027], [0029] - [0032], [0039], [0046] - [0064]; figures 4,5 * ----- | 1-15 | |
| A | LI H. H.: "Refractive index of silicon and germanium and its wavelength and temperature derivatives", JOURNAL OF PHYSICAL AND CHEMICAL REFERENCE DATA, vol. 9, no. 3, 1 January 1980 (1980-01-01) , pages 561-658, XP093233684, US ISSN: 0047-2689, DOI: 10.1063/1.555624 * the whole document * ----- -/-- | 3,14 | **TECHNICAL FIELDS SEARCHED (IPC)** G01K G01D |

The present search report has been drawn up for all claims

| Place of search | Date of completion of the search | Examiner |
|---|---|---|
| The Hague | 30 July 2025 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 19 1237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JELLISON G. E. ET AL: "The temperature dependence of the refractive index of silicon at elevated temperatures at several laser wavelengths", JOURNAL OF APPLIED PHYSICS , vol. 60, no. 2 15 July 1986 (1986-07-15), pages 841-843, XP093233693, 2 Huntington Quadrangle, Melville, NY 11747 ISSN: 0021-8979, DOI: 10.1063/1.337386 Retrieved from the Internet: URL:https://pubs.aip.org/aip/jap/article-p df/60/2/841/18605917/841_1_online.pdf [retrieved on 2024-12-12] * the whole document * ----- | 4,14 | |
| A | STRAUBE GUIDO ET AL: "OpenRRI: theory and application of open-source interferometry", 20240618, vol. 12997, 18 June 2024 (2024-06-18), pages 129971L-129971L, XP060207885, ISSN: 0277-786X, DOI: 10.1117/12.3022784 ISBN: 978-1-5106-7312-0 * the whole document * ----- | 7,15 | TECHNICAL FIELDS SEARCHED (IPC) |

The present search report has been drawn up for all claims

| Place of search | Date of completion of the search | Examiner |
|---|---|---|
| The Hague | 30 July 2025 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**page 2 of 2**

## ANNEX TO THE EUROPEAN SEARCH REPORT
## ON EUROPEAN PATENT APPLICATION NO.

EP 25 19 1237

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | Publication date | Patent family member(s) | Publication date |
|---|---|---|---|
| US 2007006663 A1 | 11-01-2007 | EP 1664706 A2 | 07-06-2006 |
| | | US 2007006663 A1 | 11-01-2007 |
| | | WO 2005024365 A2 | 17-03-2005 |
| EP 2825852 B1 | 12-09-2018 | EP 2825852 A2 | 21-01-2015 |
| | | GB 2500255 A | 18-09-2013 |
| | | JP 6167117 B2 | 19-07-2017 |
| | | JP 2015514977 A | 21-05-2015 |
| | | US 2015033848 A1 | 05-02-2015 |
| | | US 2018045541 A1 | 15-02-2018 |
| | | WO 2013136071 A2 | 19-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2568305 A1

- GB 2571575 A1

**Non-patent literature cited in the description**

- Range-resolved optical interferometric signal processing. **KISSINGER, THOMAS**. thesis. Cranfield University

- **THOMAS KISSINGER** ; **RICARDO CORREIA** ; **THOMAS O. H** ; **CHARRETT, STEPHEN W. JAMES** ; **RALPH P. TATAM**. Fiber Segment Interferometry for Dynamic Strain Measurements. *J. Lightwave Technol.*, 2016, vol. 34, 4620-4626